# EUROPEAN PATENT SPECIFICATION

(11) **EP 3 633 226 B1**
(45) Date of publication and mention of the grant of the patent: **20.04.2022**
(21) Application number: 18808697.9
(22) Date of filing: 28.05.2018
(51) Int. Cl.: F16D 65/092, F16D 65/00

(54) **BRAKE PAD AND PRODUCTION METHOD THEREOF**
BREMSKLOTZ UND HERSTELLUNGSVERFAHREN DAFÜR
PLAQUETTE DE FREIN ET SON PROCÉDÉ DE FABRICATION

(30) Priority: 02.06.2017 ES 201730762
(43) Date of publication of application: 08.04.2020
(73) Proprietor: ZF AFTERMARKET IBERICA, S.L., 31591 Corella Navarra (ES)
(72) Inventor: MÚZQUIZ ESCORZA, Jos Antonio, 31012 Pamplona (Navarra) (ES); ORRANTIA SABORIT, Julen, 31192 MUTILVA (Navarra) (ES); VIKULOV, Konstantin, 31192 MUTILVA (Navarra) (ES)
(74) Representative: ZF Friedrichshafen AG
(86) International application number: PCT/ES2018/070384
(87) International publication number: WO 2018/220246

(56) References cited:
- WO-A1-2009/001381
- AU-B2- 529 170
- DE-A1-102014 223 649
- US-A- 1 883 906
- US-A- 3 058 211
- US-A1- 2015 107 086
- US-A1- 2015 107 946
- US-A1- 2015 107 946

## Description

### Sector of the invention

The invention is related to the industry dedicated to brakes of the automotive sector, and more specifically to the industry dedicated to brake pads for brake discs.

US 2015/107946 A1 relates to a carrier body for a brake lining of a disk brake with a damper mass for modifying the vibration.

### State of the art

The placement of counterweights on support plates of brake pads for brake discs for the purpose of modifying the mass of said brake pads, and thus modifying the inertia of the brake pads in braking is known. This, in turns, modifies the vibration of the brake pads, so the noise generated during braking is reduced because the resonance frequency is also modified.

On one hand, the placement of these counterweights results in the elimination or substantial reduction of the noise generated, and on the other hand, in significantly greater effectiveness of braking, which is especially important.

The connection of these counterweights to the support plates is of great importance as they are elements that are subjected repeatedly to large stresses and vibration. Currently, the techniques used are based on introducing protrusions of the counterweights into holes included in the support plates, with the fixing of the relative position of the counterweights with respect to the support plates based on an adjustment of the protrusions of the counterweights in the holes. In this way, these techniques are based on the friction between external shapes of the protrusions housed in the holes and the internal walls of the holes themselves to fix the relative position of the counterweights with respect to the support plates.

Taking into account the large stresses and vibrations to which the support plates are repeatedly subjected, these techniques are deficient due to the fact that the over time, the counterweights, at least, end up rotating in the holes, which is highly undesirable for the proper elimination of vibration and noise. In addition, these techniques require a high degree of precision when arranging the protrusions inserted into the corresponding holes located on the support plates, which negatively affects the process of manufacturing the brake pads by increasing the production time, and therefore the final cost of the brake pads.

In light of the described disadvantages of the existing techniques or solutions, it is evident that a solution is needed that allows adequate fixing of the counterweights in the support plates in a way that is effective over time against the numerous stresses and vibrations to which they are subjected during use.

### Object of the invention

With the purpose of fulfilling this objective and solving the technical problems commented thus far, in addition to providing additional advantages that can be derived later, the present invention provides a brake pad for a brake disc, as well as a method for producing said brake pad.

The brake pad for brake disc comprises a support plate for receiving a friction lining, the support plate having a first surface, a second surface and at least one hole that extends from the first surface to the second surface. The brake pad likewise comprises at least one counterweight rigidly connected or fixed to the support plate to modify the vibration of the support plate, the counterweight having a first face facing the first surface and a protrusion that projects from the first face and has a free end, the protrusion being inserted into the hole.

In addition, the brake pad for brake disc comprises at least one groove in the second surface of the support plate in a region near the hole and extending from the hole, with the protrusion being partially housed in the groove. The hole has a circular cross-section.

In this way, the brake pad is provided with at least one of the counterweights fixed on the support plate exerting compression on said support plate together through the first face and the protrusion. The first face exerts pressure on the first surface of the support plate, while the protrusion exerts pressure against the second surface of the support plate.

This makes it possible for the counterweights to form a rigid body with the support plate, or in other words, with the brake pad, such that it prevents the counterweights from separating from the support plate during use.

Likewise, the brake pad is provided with the at least one of the fixed counterweights offering a resistance as it is rotated in the corresponding fixing hole. The configuration of the groove is such that, the relative rotation of the counterweights in either direction of rotation is prevented by the generation of resistance as a result of the fact that the protrusion is partially housed in the groove.

This resistance is considerable to cancel the force or inertia received by the counterweights to tend to rotate. In this way, the portions of the protrusions housed in the grooves act as anti-rotation arms. Said portions, in addition to offering resistance to rotation due to friction on a bottom of the grooves, which is the most depressed part of the grooves with respect to the second surface, offer a large degree of resistance due to the frontal contact with several sides of the grooves, which are significantly parallel to the radial extension of the grooves.

Thus, the grooves may have lateral faces forming the sides, two for each one of the grooves, forming an angle preferably between 65° and 165° with the second surface of the support plate, and more preferably, between 90° and 145°. Alternatively, the grooves will be defined by a concavity, such that the sides and the bottom are definable together by a concave surface.

There may be two, three, four, or even five grooves. A larger number of grooves in correspondence to each one of the holes supposes a greater distribution of the stress to be borne to prevent the rotation of the corresponding counterweight. Each of the grooves has an extension in the radial direction with respect to the hole, it extends along the second surface of the support plate moving linearly away from the hole, offering greater resistance to tangential stresses due to the tendency of the counterweight to rotate. In addition, the grooves extend from the holes such that they facilitate the partial insertion of the protrusions into the grooves when they are deformed for the fixing of the counterweights on the support plate.

The method for producing a brake pad for brake disc comprises the steps of introducing at least one protrusion of a counterweight into a hole of a support plate by means of insertion of one free end of the protrusion through a first surface of the support plate until it extends beyond the second surface; displacement of the counterweight with respect to the support plate until it is prevented from continuing to be displaced towards the support plate, that is to say, until the first face is prevented from continuing, being close to the first surface; and exercising a force on the free end of the protrusion such that the protrusion is deformed, being partially housed in at least one groove located in the second surface of the support plate in a region near the hole and extending from the hole, the hole having a circular cross-section. This provides a production method for obtaining the brake pad described above.

By means of this method, the brake pad is provided with at least one of the counterweights fixed on the support plate, and with the at least one of the fixed counterweights offering a resistance as it is turned in the corresponding fixing hole by means of the portions of the protrusions housed in the grooves, such that said counterweight and the support plate form a rigid body.

The force applied on the free end of the protrusion for its deformation is transmitted to said free end by means of at least one impact, with a specific duration, or alternatively by means of a force of pressure, with a continued duration.

The grooves are obtained are obtained by means of machining executed in the support plate, or are alternatively obtained by stamping. The grooves can be obtained by stamping when the support plate is cut or once it has been cut. In accordance with this, the grooves obtained with an extension in the radial direction with respect to the hole. Preferably, the grooves are obtained starting at or extending from the holes and ending away from the holes.

Likewise, the grooves are preferably obtained with two lateral faces, each one of the two lateral faces forming an angle preferably between 65° and 165°, and more preferably, between 90° and 145°, with the second surface of the support plate.

### Description of the figures

Figure 1 shows a rear view of a support plate that is the object of the present invention, with several grooves according to an exemplary embodiment.
Figure 2 shows a rear view of the support plate that is the object of the present invention, with several grooves according to another exemplary embodiment.
Figure 3 shows a perspective view of the support plate of Figure 2, along with several counterweights.
Figure 4 shows a perspective view of the support plate in Figure 3 with the counterweights fixed such that they together form a rigid body.
Figures 5A-5G show different embodiments of the grooves of the support plate object of the present invention.
Figures 6A-6C show a sequence of fixing of one of the counterweights in a hole of the support plate object of the present invention.

### Detailed description of the invention

The present invention relates to a disc brake pad and a method for producing said brake pad.

The disc brake pad comprises a support plate (1) for receiving a friction lining, not shown in the figures, which has a first surface (1.1), a second surface (1.2), which is opposite to the first surface (1.1), and at least one hole (3) that extends from the first surface (1.1) to the second surface (1.2), which is to say that the hole (3) is a through hole.

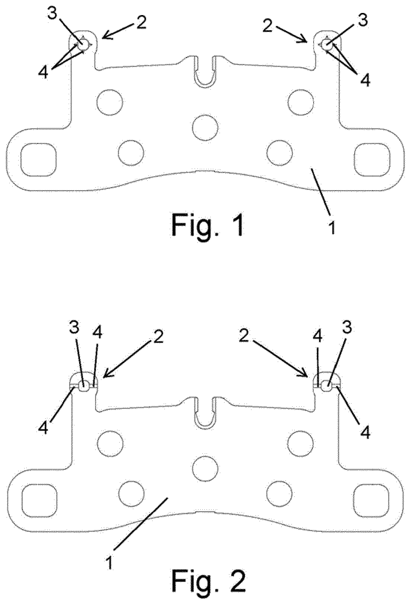

Preferably, the support plate (1) includes a projection (2) for each one of the holes (3), each one of the holes (3) being located on the corresponding projection (2), as shown in Figure 1. Alternatively, the support plate (1) may lack the projections (2), although the support plate (1) includes the holes (3) at points on it.

The disc brake pad likewise comprises at least one counterweight (5) rigidly connected or fixed to the support plate (1) to modify the vibration of the support plate (1). Consequently, the vibration of the brake pad during use is modified such that the noise generated during the corresponding braking is eliminated, or at least reduced significantly and braking efficiency is increased.

Each one of the counterweights (5) has a first face (5'), in addition to a protrusion (6) that projects from the first face (5') and has a free end (6'), With the counterweight (5) fixed on the support plate (1), together forming a rigid body, the first face (5') is arranged facing the first surface (1.1) of the support plate (1). In addition, the protrusion (6) is inserted through the hole (3).

In addition, the disc brake pad comprises at least one groove (4) in the second surface (1.2) of the support plate (1) in a region near the hole (3). With the counterweight (5) and the support plate (1) together forming a rigid body, the protrusion (6) is partially housed in the groove (4).

In this way, in addition to offering a state of compression on the support plate (1) by means of the first face (5') on the first surface (1.1) and the protrusion (6) against the second surface (1.2), resistance to rotation is provided by means of a portion of the protrusion (6) housed in the groove (4), both clockwise and counter-clockwise.

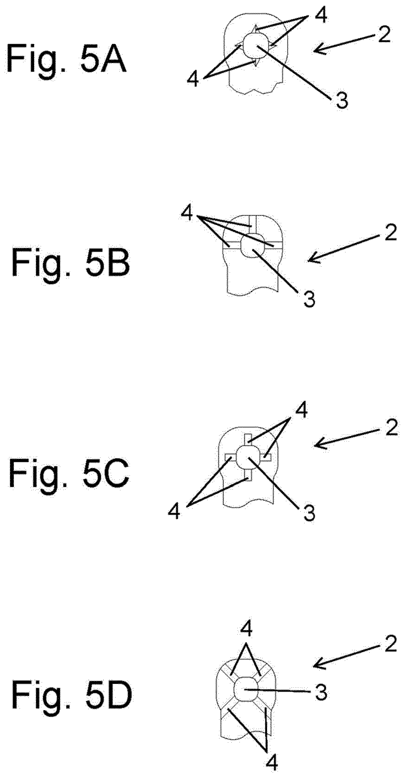

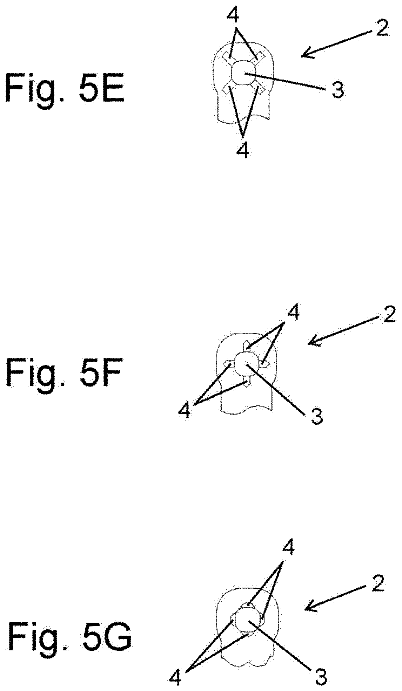

The groove (4) has two lateral faces (4'), these two lateral faces (4') being preferably joined by a bottom, as shown for example in Figures 5B to 5F. Alternatively, the groove (4) may be defined by a concave surface, such that the lateral faces (4') and the bottom present continuous concavity between them, as shown in figure 5G. Thus, the groove (4) can also be defined as recesses or depressions in the second surface (1.2).

The bottom, starting from the groove (4) that is most depressed with respect to the second surface (1.2), is preferably significantly parallel to the second surface (1.2) and to the first surface (1.1), and offers resistance by friction for the corresponding part of the protrusion (6) that is in contact with it, in addition to contributing to the state of compression on the support plate (1) by means of the portion of the protrusion (6) housed in the groove (4). As another alternative, the two lateral faces (4') may be joined directly to each other, which is to say, lacking said bottom, as can be derived, for example, from Figures 1 to 5A.

Preferably, each one of the two lateral faces (4') forms an angle preferably between 65° and 165° with the second surface of the support plate (1), and more preferably, between 90° and 145°. In this way, the portion of the protrusion (6) housed in the groove (4) offers maximised resistance against the rotational stresses on the hole (3) transmitted to the counterweight (5) as a result of vibration. Said portion acts like an arm anchored and recessed into the groove (4) to prevent the protrusion (6) from rotating, and therefore the rotation of the counterweight (5).

The groove (4) has an extension on the second surface (1.2) in the radial direction with respect to the hole (3), which is to say that the groove (4) extends along the second surface (1.2) moving linearly away from the hole (3), offering greater resistance to tangential stresses due to the tendency of the counterweight (5) to rotate. In addition, the groove (4) extends from the hole (3) such that it facilitates the partial insertion of the protrusion (6) into said groove (4).

Preferably, there are two grooves (4) comprised in the region close to the hole (3) in accordance with the description, such that the stress to be exerted by the portion of the protrusion (6) housed in each one of the grooves (4) is reduced when preventing rotation of the protrusion (6) in the hole (3). In this way, the number of grooves (4) comprised may be three, four or more. Figures 5A to 5F show different examples or configurations, with three or four grooves (4) comprised in the region near one of the holes (3), and extending from said hole (3).

Preferably, and in accordance with the entire description, the support plate (1) has two holes (3). Likewise, there are two counterweights (5) fixed on the brake pad, with each one of the counterweights (5) fixed on the support plate (1) with the protrusion (6) inserted into one of the holes (3) and partially housed in the corresponding groove (4) or grooves (4).

The method for producing the brake pad for brake disc comprises introducing at least one of the protrusions (6), of one of the counterweights (5), into one of the holes (3) of the support plate (1) by means of insertion of the free end (6') of the protrusion (6) through the first surface (1.1) of the support plate (1) until it extends beyond the second surface (1.2).

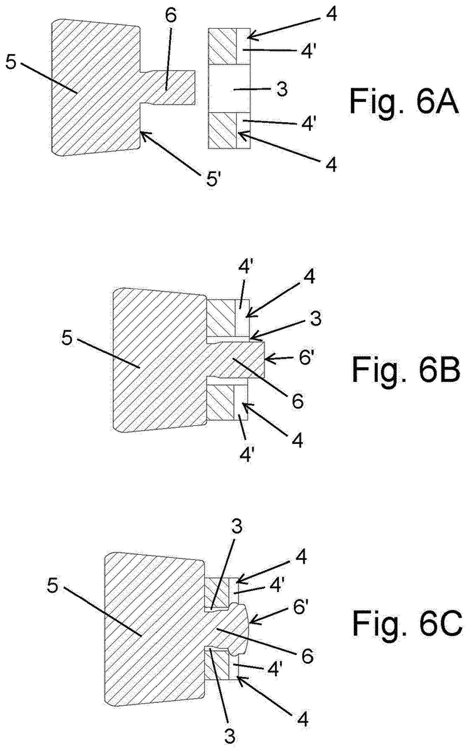

Figure 6A shows one of the counterweights (5), shown in a cross-section, and a portion of the support plate (1), also shown in a cross-section, before the protrusion (6) of said counterweight (5) is introduced or inserted into the hole (3) shown in a longitudinal cross-section.

In order to facilitate this step of the production method, and therefore making it possible to greatly improve efficiency and speed, which results in lower costs, the protrusion (6) has a cross-section with an area slightly smaller than the area of the cross-section of the hole (3). In addition, the shape of both cross-sections enables rapid insertion without interaction between the protrusion (6) and the hole (3).

In addition, the production method comprises displacing the counterweight (5) with respect to the support plate (1) until it is prevented from continuing to be displaced towards the support plate (1), which is to say until it butts against it. The first face (5') is arranged facing the first surface (1.1) of the support plate (1) and without the possibility of continuing to be displaced towards said first surface (1.1).

Figure 6B shows one of the counterweights (5) displaced until it is prevented from continuing to be displaced towards the support plate (1) with prior insertion of the free end (6') of the protrusion (6) through the first surface (1.1) of the support plate (1) until it extends beyond the second surface (1.2). The protrusion (6) has a longitudinal extension longer than that of the hole (3). Likewise, the longitudinal extension of the protrusion (6) is greater than the thickness of the support plate (1).

In addition, the production method comprises applying a force on the free end (6') of the protrusion (6) such that the protrusion (6) is deformed, being partially housed in at least one groove (4) located in the second surface (1.2) of the support plate (1) in the region near the hole (3). This force is applied either by means of one or multiple impacts, or by means of a continuous force of pressure during a specific time.

In this way, the state of compression is obtained on the support plate (1) by means of the first face (5') on the first surface (1.1) and the protrusion (6) on the second surface (1.2), Thus, the counterweight (5) is fixed on the support plate (1), together forming a rigid body. In addition, resistance to rotation relative to the protrusion (6) is generated, and therefore the rotation of the counterweight (5), with respect to the support plate (1) by means of the portion of the protrusion (6) housed in the corresponding groove (4), both clockwise and counterclockwise. Figure 6C shows a result of the deformation obtained by the application of the force described with two grooves (4) associated with the hole (3) shown, and with the protrusion (6) partially housed in each one of the two grooves (4).

The grooves (4) are preferably obtained directly along with the support plates (1). That is, the grooves (4) are preferably obtained by stamping during the cutting of the support plates (1). Alternatively, the grooves (4) may also be obtained by means of additional machining or stamping on the support plate (1) after the support plate (1) has been previously obtained. That is, the grooves (4) may also be included after the support plates (1) are cut.

The grooves (4) are obtained with the two lateral faces (4') preferably forming an angle between 65° and 165°, and more preferably between 90° and 145° such that a good ratio is offered in regard to the resistance to the rotation of the counterweight (5) and the ease with which it can be obtained.

When the grooves (4) to be obtained by means of additional machining in the region near the hole (3) after the cutting of the support plate (1) are an even number, the grooves (4) are preferably machined aligned in pairs to speed up said additional machining.

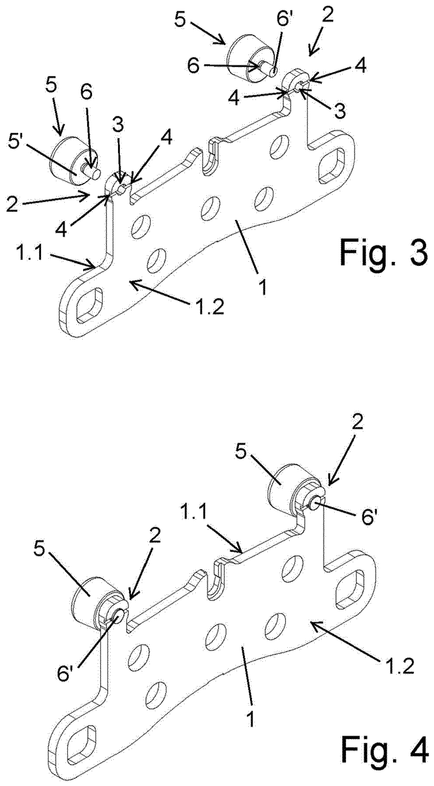

There are preferably eight grooves (4) that are made in the support plate (1), four to correspond to each one of the holes (3). The four grooves (4) of each one of the holes (3) being aligned with each other two by two. Likewise, two of the grooves (4) of one of the holes (3) are aligned with another two of the grooves (4) of the other hole (3). This is shown in Figure 1. Alternatively, there may be four grooves (4) that are made in the support plate (1), two to correspond to each one of the holes (3), with these four grooves (4) being aligned to each other to make it simpler and faster to obtain them. This is shown in Figures 2 and 3.

Preferably, and in accordance with the previous description, the production method can be applied by fixing two of the counterweights (5) on two of the holes (3) of the support plate (1), either simultaneously to reduce the production time or first one and then the other to simplify the operation of fixing the counterweights (5), with the protrusions (6) of the counterweights (5) partially housed in the corresponding grooves (4).

## Claims

1. A brake pad for brake disc, which comprises:
- a support plate (1) for receiving a friction lining, with the support plate (1) having:
o a first surface (1.1), a second surface (1.2) and at least one hole (3) that extends from the first surface (1.1) to the second surface (1.2);
- at least one counterweight (5) rigidly connected to the support plate (1) to modify the vibration of the support plate (1), with the counterweight (5) having:
∘ a first face (5') facing the first surface (1.1); and
∘ a protrusion (6) that projects from the first face (5') and has a free end (6'), with the protrusion (6) being inserted into the hole (3);
**characterised in that** it also comprises:
- at least one groove (4) in the second surface (1.2) of the support plate (1) in a region near the hole (3) and extending from the hole (3);
wherein the protrusion (6) is partially housed in the groove (4), and wherein the hole (3) has a circular cross-section.

2. The brake pad according to claim 1, **characterised in that** the groove (4) has an extension in a radial direction with respect to the hole (3).

3. The brake pad according to claim 1 or 2, **characterised in that** there are at least two grooves (4).

4. The brake pad according to any one of the preceding claims, **characterised in that** the grooves (4) have two lateral faces(4'), each one of the two lateral faces (4') forming an angle between 65° and 165° with the second surface (1.2) of the support plate (1).

5. The brake pad according to claim 4, **characterised in that** the angle of each one of the two lateral faces (4') with the second surface (1.2) is between 90° and 145°.

6. A method for producing a brake pad for brake disc according to any of the previous claims, **characterised in that** it comprises the steps of:
- introducing at least one protrusion (6) of a counterweight (5) into a hole (3) of a support plate (1) by means of insertion of one free end (6.1) of the protrusion (6) through a first surface (1.1) of the support plate (1) until it extends beyond the second surface (1.2);
- displacing the counterweight (5) with respect to the support plate (1) until it is prevented from continuing to be displaced towards the support plate (1);
- applying a force on the free end (6') of the protrusion (6) such that the protrusion (6) is deformed, being partially housed in at least one groove (4) located in the second surface (1.2) of the support plate (1) in a region near the hole (3) and extending from the hole (3), the hole (3) having a circular cross-section.

7. The production method according to claim 6, **characterised in that** the force is applied on the free end (6') of the protrusion (6) by means of at least one impact.

8. The production method according to claim 6, **characterised in that** the force is applied on the free end (6') of the protrusion (6) by means of a force of pressure.

9. The production method according to any one of the claims 6 to 8, **characterised in that** the groove (4) is obtained by means of machining executed in the support plate (1).

10. The production method according to any one of the claims 6 to 8, **characterised in that** the groove (4) is obtained by stamping.

11. The production method according to any one of the claims 6 to 10, **characterised in that** the groove (4) is obtained with an extension in the radial direction with respect to the hole (3).

12. The production method according to any one of the claims 6 to 11, **characterised in that** the groove (4) is obtained with two lateral faces (4'), each one of the two lateral faces (4') forming an angle between 65° and 165° with the second surface (1.2) of the support plate (1).

## Patentansprüche

1. Bremsklotz für eine Scheibenbremse, der Folgendes umfasst:
- eine Trägerplatte (1) zur Aufnahme eines Reibbelags, wobei die Trägerplatte (1) Folgendes aufweist:
- eine erste Fläche (1.1), eine zweite Fläche (1.2) und mindestens eine Bohrung (3), die sich von der ersten Fläche (1.1) zu der zweiten Fläche (1.2) erstreckt;
- mindestens ein Gegengewicht (5), das dahingehend starr mit der Trägerplatte (1) verbunden ist, die Schwingung der Stützplatte (1) zu modifizieren, wobei das Gegengewicht (5) Folgendes aufweist:
- eine erste Seite (5'), die zu der ersten Fläche (1.1) weist; und
- einen Vorsprung (6), der von der ersten Seite (5') vorragt und ein freies Ende (6') aufweist, wobei der Vorsprung (6) in die Bohrung (3) eingeführt ist;
**dadurch gekennzeichnet, dass** er ferner Folgendes umfasst:
- mindestens eine Nut (4) in der zweiten Fläche (1.2) der Trägerplatte (1) in einem Bereich in der Nähe der Bohrung (3), die sich von der Bohrung (3) aus erstreckt;
wobei der Vorsprung (6) zum Teil in der Nut (4) untergebracht ist und wobei die Bohrung (3) einen kreisförmigen Querschnitt aufweist.

2. Bremsklotz nach Anspruch 1, **dadurch gekennzeichnet, dass** die Nut (4) eine Erstreckung in einer radialen Richtung bezüglich der Bohrung (3) aufweist.

3. Bremsklotz nach Anspruch 1 oder 2, **dadurch gekennzeichnet, dass** es mindestens zwei Nuten (4) gibt.

4. Bremsklotz nach einem der vorhergehenden Ansprüche, **dadurch gekennzeichnet, dass** die Nuten (4) zwei laterale Seiten (4') aufweisen, wobei jede der zwei lateralen Seiten (4') einen Winkel zwischen 65° und 165° zur zweiten Fläche (1.2) der Trägerplatte (1) bildet.

5. Bremsklotz nach Anspruch 4, **dadurch gekennzeichnet, dass** der Winkel jeder der zwei lateralen Seiten (4') zu der zweiten Fläche (1.2) zwischen 90° und 145° liegt.

6. Verfahren zur Herstellung eines Bremsklotzes für eine Scheibenbremse nach einem der vorhergehenden Ansprüche, **dadurch gekennzeichnet, dass** es die folgenden Schritte umfasst:
- Einsetzen mindestens eines Vorsprungs (6) eines Gegengewichts (5) in eine Bohrung (3) einer Trägerplatte (1) durch Einführen eines freien Endes (6.1) des Vorsprungs (6) durch eine erste Fläche (1.1) der Trägerplatte (1), bis es sich über die zweite Fläche (1.2) hinaus erstreckt;
- Verschieben des Gegengewichts (5) bezüglich der Trägerplatte (1), bis es nicht weiter zur Trägerplatte (1) geschoben werden kann;
- Anlegen einer Kraft an das freie Ende (6') des Vorsprungs (6), so dass der Vorsprung (6) verformt wird, wobei er zum Teil in mindestens einer Nut (4), die in der zweiten Fläche (1.2) der Trägerplatte (1) in einem Bereich in der Nähe der Bohrung (3) positioniert ist und die sich von der Bohrung (3) aus erstreckt, untergebracht ist, wobei die Bohrung (3) einen kreisförmigen Querschnitt aufweist.

7. Herstellungsverfahren nach Anspruch 6, **dadurch gekennzeichnet, dass** die Kraft an das freie Ende (6') des Vorsprungs (6) durch mindestens einen Schlag angelegt wird.

8. Herstellungsverfahren nach Anspruch 6, **dadurch gekennzeichnet, dass** die Kraft an das freie Ende (6') des Vorsprungs (6) durch eine Druckkraft angelegt wird.

9. Herstellungsverfahren nach einem der Ansprüche 6-8, **dadurch gekennzeichnet, dass** die Nut (4) durch maschinelle Bearbeitung, die an der Trägerplatte (1) durchgeführt wird, erhalten wird.

10. Herstellungsverfahren nach einem der Ansprüche 6-8, **dadurch gekennzeichnet, dass** die Nut (4) durch Stanzen erhalten wird.

11. Herstellungsverfahren nach einem der Ansprüche 6-10, **dadurch gekennzeichnet, dass** die Nut (4) mit einer Erstreckung in der radialen Richtung bezüglich der Bohrung (3) erhalten wird.

12. Herstellungsverfahren nach einem der Ansprüche 6-11, **dadurch gekennzeichnet, dass** die Nut (4) mit zwei lateralen Seiten (4') erhalten wird, wobei jede der zwei lateralen Seiten (4') einen Winkel zwischen 65° und 165° zur zweiten Fläche (1.2) der Trägerplatte (1) bildet.

## Revendications

1. Plaquette de frein pour disque de frein, qui comprend :
- une plaque de support (1) pour recevoir une garniture de friction, la plaque de support (1) ayant :
∘ une première surface (1.1), une seconde surface (1.2) et au moins un trou (3) qui s'étend à partir de la première surface (1.1) jusqu'à la seconde surface (1.2) ;
- au moins un contrepoids (5) raccordé rigidement à la plaque de support (1) pour modifier la vibration de la plaque de support (1), le contrepoids (5) ayant :
∘ une première face (5') faisant face à la première surface (1.1) ; et
∘ une protubérance (6) qui fait saillie à partir de la première face (5') et a une extrémité libre (6'), la protubérance (6) étant insérée dans le trou (3) ;
**caractérisée en ce qu'**elle comprend également :
- au moins une rainure (4) dans la seconde surface (1.2) de la plaque de support (1) dans une région près du trou (3) et s'étendant à partir du trou (3) ;
dans laquelle la protubérance (6) est partiellement logée dans la rainure (4), et dans laquelle le trou (3) a une section transversale circulaire.

2. Plaquette de frein selon la revendication 1, **caractérisée en ce que** la rainure (4) a une extension dans une direction radiale par rapport au trou (3).

3. Plaquette de frein selon la revendication 1 ou 2, **caractérisée en ce qu'**il y a au moins deux rainures (4).

4. Plaquette de frein selon l'une quelconque des revendications précédentes, **caractérisée en ce que** les rainures (4) ont deux faces latérales (4'), chacune des deux faces latérales (4') formant un angle entre 65° et 165° avec la seconde surface (1.2) de la plaque de support (1).

5. Plaquette de frein selon la revendication 4, **caractérisée en ce que** l'angle de chacune des deux faces latérales (4') avec la seconde surface (1.2) est entre 90° et 145°.

6. Procédé pour produire une plaquette de frein pour disque de frein selon l'une quelconque des revendications précédentes, **caractérisé en ce qu'**il comprend les étapes de :
- l'introduction d'au moins une protubérance (6) d'un contrepoids (5) dans un trou (3) d'une plaque de support (1) au moyen d'insertion d'une extrémité libre (6.1) de la protubérance (6) à travers une première surface (1.1) de la plaque de support (1) jusqu'à ce qu'elle s'étende au-delà de la seconde surface (1.2) ;
- le déplacement du contrepoids (5) par rapport à la plaque de support (1) jusqu'à ce qu'il soit empêché de continuer d'être déplacé vers la plaque de support (1) ;
- l'application d'une force sur l'extrémité libre (6') de la protubérance (6) de telle sorte que la protubérance (6) soit déformée, étant partiellement logée dans au moins une rainure (4) située dans la seconde surface (1.2) de la plaque de support (1) dans une région près du trou (3) et s'étendant à partir du trou (3), le trou (3) ayant une section transversale circulaire.

7. Procédé de production selon la revendication 6, **caractérisé en ce que** la force est appliquée sur l'extrémité libre (6') de la protubérance (6) au moyen d'au moins un impact.

8. Procédé de production selon la revendication 6, **caractérisé en ce que** la force est appliquée sur l'extrémité libre (6') de la protubérance (6) au moyen d'une force de pression.

9. Procédé de production selon l'une quelconque des revendications 6 à 8, **caractérisé en ce que** la rainure (4) est obtenue au moyen d'usinage exécuté dans la plaque de support (1).

10. Procédé de production selon l'une quelconque des revendications 6 à 8, **caractérisé en ce que** la rainure (4) est obtenue par estampage.

11. Procédé de production selon l'une quelconque des revendications 6 à 10, **caractérisé en ce que** la rainure (4) est obtenue avec une extension dans la direction radiale par rapport au trou (3).

12. Procédé de production selon l'une quelconque des revendications 6 à 11, **caractérisé en ce que** la rainure (4) est obtenue avec deux faces latérales (4'), chacune des deux faces latérales (4') formant un angle entre 65° et 165° avec la seconde surface (1.2) de la plaque de support (1).
